# EUROPÄISCHE PATENTSCHRIFT

(11) **EP 1 637 373 B1**
(45) Veröffentlichungstag und Bekanntmachung des Hinweises auf die Patenterteilung: **04.12.2013**
(21) Anmeldenummer: 05018777.2
(22) Anmeldetag: 30.08.2005
(51) Int. Cl.: B60J 5/04

(54) **Vormontageeinheit für ein Kraftfahrzeug, Kraftfahrzeugtür mit einer derartigen Vormontageeinheit sowie Montage- und Demontageverfahren einer derartigen Kraftfahrzeugtür**
Pre-assembling unit for a motor vehicle, vehicle door with such a unit and assembling and disassembling method of such a vehicle door.
Unité de préassemblage pour un véhicule à moteur, porte de véhicule à moteur avec une telle unité et procédé de montage et démontage d'une telle porte de véhicule à moteur.

(30) Priorität: 20.09.2004 DE 102004045453
(43) Veröffentlichungstag der Anmeldung: 22.03.2006
(73) Patentinhaber: Lisa Dräxlmaier GmbH, 84137 Vilsbiburg (DE)
(72) Erfinder: Unterreiner, Klaus, 84144 Geisenhausen (DE); Bauer, Michael, 84453 Mühldorf (DE)
(74) Vertreter: HOFFMANN EITLE

(56) Entgegenhaltungen:
- WO-A1-01/89868
- DE-A1- 4 426 426
- DE-A1- 19 942 644
- GB-A- 2 262 761

## Beschreibung

### 1 Gebiet der Erfindung

Die vorliegende Erfindung betrifft eine Vormontageeinheit für ein Kraftfahrzeug und zum Verbinden mit einem Türkasten des Kraftfahrzeugs. Eine solche Vormontageeinheit wird beim Automobilbauer in einem Kraftfahrzeug verbaut und umfasst einen Fensterrahmen, eine zumindest in dem Fensterrahmen geführte Seitenscheibe, einen Fensterhebermechanismus, der mit der Seitenscheibe in Verbindung steht, um diese zu heben oder zu senken und einen mit dem Fensterrahmen lösbar verbundenen Aggregateträger mit einer Nassseite und einer Trockenseite zum Trennen des Türkastens in einen Nass- und einen Trockenbereich. Darüber hinaus betrifft die vorliegende Erfindung auch eine Kraftfahrzeugtür mit einer derartigen Vormontageeinheit sowie ein Montage- bzw. Demontageverfahren einer derartigen Kraftfahrzeugtür.

### 2 Stand der Technik

Kraftfahrzeugtüren werden im Stand der Technik bisher primär aus Einzelteilen zusammengesetzt bzw. montiert. D.h., die Fahrzeugtür besteht aus integral ausgebildetem Fensterrahmen und Türkasten und wird mit den notwendigen Komponenten, wie beispielsweise Fensterhebermechanismus, Seitenscheibe, Schloss, etc. versehen. Bei einigen Kraftfahrzeugtüren sind Aggregate, wie z.B. Fensterhebermechanismus oder Schloss, auch auf einem Aggregateträger vormontiert. Der Aggregateträger wird dabei mit lösbaren Befestigungsmitteln an der Kraftfahrzeugtür angebracht, um zu Wartungs- oder Reparaturzwecken den Aggregateträger auf einfache Art und Weise wieder von der Türkonstruktion (Fensterrahmen und Türkasten) lösen zu können.

Derzeit gehen die Entwicklungen jedoch dahin, dass beim Automobilhersteller immer größere Vormontageeinheiten geschaffen werden, um die Montagezeiten am (Haupt-)Montageband niedrig zu halten. Folglich bestehen Bestrebungen auch bei einer Kraftfahrzeugtür, einen Großteil der Bauteile als Vormontageeinheit auszubilden.

Die DE 199 42 644 Al und die DE 199 42 650 A1 beschreiben eine derartige Vormontageeinheit und bilden die Basis für den Oberbegriff des Patentanspruchs 1. In diesen genannten Druckschriften ist der Fensterhebermechanismus direkt mit dem Aggregateträger verbunden, um diesen zu stabilisieren und zu fixieren. Wird die Vormontageeinheit in einen Türkasten eines Kraftfahrzeugs eingesetzt, wird einerseits der Fensterrahmen mit dem Türkasten verbunden und andererseits auch über Schraubverbindungen der Aggregateträger. Der Fensterhebermechanismus bleibt stets nur mit dem Aggregateträger verbunden. Im Reparaturfall bzw. zur Demontage ergibt sich bei diesem Stand der Technik daher das Problem, dass, selbst wenn die Befestigungsmittel zum Verbinden des Geräteträgers mit einerseits dem Fensterrahmen und andererseits dem Türkasten lösbar sind, dieser nicht gesondert (d.h. alleine) entfernt werden kann, weil der Fensterhebermechanismus fest mit dem Aggregateträger verbunden ist. D.h. es müsste entweder der Fensterhebermechanismus inklusive Seitenscheibe mit entfernt werden oder aber die gesamte Vormontageeinheit mit dem Fensterrahmen müsste von dem Türkasten getrennt werden. Die Verbindung zwischen Fensterrahmen und Türkasten ist jedoch eine Verbindung, die wünschenswerterweise nicht mehr gelöst werden soll. So ist der Demontagevorgang der erstgenannten Variante aufgrund der beengten Platzverhältnisse kompliziert bzw. überhaupt nicht möglich und der andere Demontagevorgang mit einem großen Aufwand verbunden und darüber hinaus das Lösen des Fensterrahmens von dem Türkasten nicht erwünscht (bspw. wegen der bereits eingestellten Spaltmaße, der dazwischen angeordneten Dichtung, etc.).

Eine Vormontageeinheit mit den Merkmalen im Oberbegriff von Anspruch 1 ist aus der DE-A-44 26 426 bekannt.

### Zusammenfassen der Erfindung

Folglich besteht das der Erfindung zugrunde liegende technische Problem darin, eine Vormontageeinheit zu schaffen, die gegenüber dem oben genannten Stand der Technik verbessert ist und trotz eines großen Vormontageumfangs die getrennte Demontage des Aggregatträgers nach der Verbindung der Vormontageeinheit mit dem Türkasten des Kraftfahrzeugs auf einfache Art und Weise ermöglicht. Ferner besteht die Aufgabe darin, eine entsprechende Kraftfahrzeugtür sowie ein Montage- bzw. Demontageverfahren dafür bereit zu stellen.

Die obigen Probleme werden durch eine Vormontageeinheit mit den Merkmalen des Patentanspruchs 1 sowie eine Kraftfahrzeugtür mit den Merkmalen des Patentanspruchs 14, ein Montageverfahren gemäß den Merkmalen des Patentanspruchs 15 und ein Demontageverfahren mit den Merkmalen des Patentanspruchs 16 gelöst.

Vorteilhafte Weiterbildungen der vorliegenden Erfindung sind in den Unteransprüchen genannt.

So liegt der vorliegenden Erfindung der Gedanke zugrunde, dass der Aggregatträger, der in der Kraftfahrzeugtür einerseits als Träger von Bauelementen, beispielsweise Lautsprechern, Türöffnerelementen, etc. sowie als Trennung des Türkastens in einen Nassbereich und einen Trockenbereich dient, andererseits auch als Montagehilfe für den Fensterhebermechanismus zu verwenden ist. Dies ermöglicht es, die komplette Vormontageeinheit aus Fensterrahmen, Aggregateträger, Seitenscheibe und damit in Verbindung stehendem Fensterhebermechanismus komplett als autarke Einheit vorprüfen zu können, bevor diese an den Automobilbauer ausgeliefert wird. Um die Wartung und Demontage des Aggregateträgers als separates Element auch nach der Endmontage zu ermöglichen, liegt der Erfindung jedoch der Gedanke zugrunde, dass die Anbindung des Fensterhebermechanismus an dem Aggregateträger nur zu Montage-, Prüf- und Transportzwecken der Vormontageeinheit dient und die endgültige Anbindung des Fensterhebermechanismus primär an dem Türkasten des Kraftfahrzeugs erfolgt.

Zu diesem Zweck umfasst die Vormontageeinheit für ein Kraftfahrzeug und zum Verbinden mit einem Türkasten des Kraftfahrzeugs gemäß der vorliegenden Erfindung einen Fensterrahmen, eine zumindest in dem Fensterrahmen geführte Seitenscheibe, einen Fensterhebermechanismus, der mit der Seitenscheibe in Verbindung steht, um sie zu heben oder zu senken und einen mit dem Fensterrahmen lösbar verbundenen Aggregateträger mit einer Nassseite und einer Trockenseite zum Trennen des Türkastens in einen Nass- und einen Trockenbereich. Ferner kennzeichnet sich die erfindungsgemäße Vormontageeinheit dadurch, dass wenigstens ein Befestigungsmittel vorgesehen ist, das den Fensterhebermechanismus mit dem Aggregateträger verbindet und von der Trockenseite des Aggregateträgers her lösbar ist und dadurch, dass wenigstens eine an oder in dem Fensterhebermechanismus vorgesehene Montagevorbereitung ausgebildet ist, die zum Verbinden des Fensterhebermechanismus mit dem Türkasten von der Trockenseite des Aggregateträgers her zugänglich ist. Diese Ausgestaltung ermöglicht einerseits die Anlieferung der Vormontageeinheit als komplett vorgeprüfte autarke Einheit mit Fensterrahmen, Seitenscheibe und Fensterhebermechanismus, der zu diesem Zweck mit dem Aggregateträger verbunden ist. Diese Verbindung ist erfindungsgemäß lösbar ausgestaltet und zwar von der Trockenseite des Aggregateträgers her. Dies ermöglicht im Demontagefall, den Aggregateträger, nachdem eine Türinnenverkleidung entfernt wurde, vollständig und einzeln zu entfernen. D.h. es werden alle Verbindungen des Aggregateträgers mit dem Fensterrahmen, mit dem Türkasten und ebenso die Verbindung des Aggregateträgers mit dem Fensterhebermechanismus gelöst, so dass der Aggregateträger abgenommen werden kann. Wie vorstehend erwähnt, weist der Fensterhebermechanismus jedoch eine Montagevorbereitung auf, die es ermöglicht, den Fensterhebermechanismus bei der Montage von der Trockenseite des Aggregateträgers her mit dem Türkasten zu verbinden. Folglich besteht nach der Montage der Vormontageeinheit an dem Türkasten des Kraftfahrzeugs auch eine feste Anbindung des Fensterhebermechanismus an dem Türkasten. Bei der Demontage, bei der die lösbare Befestigung des Fensterhebermechanismus an dem Aggregateträger gelöst wird, verbleibt der Fensterhebermechanismus somit trotzdem - an dem Türkasten - fixiert, so dass keine Dejustierung oder Verschiebung erfolgt. Somit ermöglicht es die vorliegende Erfindung, eine Vormontageeinheit mit einem großen Vormontageumfang bereit zu stellen, die zumindest den Fensterrahmen, die Seitenscheibe, den Fensterhebermechanismus sowie den Aggregateträger umfasst und die als autarke Einheit prüfbar ist, wobei bei montierter Vormontageeinheit im Türkasten des Kraftfahrzeugs der Aggregateträger auch als separates Element gelöst und abgenommen werden kann, ohne dass andere Elemente - mit Ausnahme der Türinnenverkleidung - zuvor entfernt werden müssen. Somit ermöglicht die erfindungsgemäße Vormontageeinheit eine separate Demontage des Aggregateträgers auf einfache Art und Weise und zugleich eine autark prüfbare Vormontageeinheit mit großem Vormontageumfang.

Bei Fensterhebermechanismen sind zwei unterschiedliche Mechanismen bekannt. Bei einem dieser Mechanismen handelt es sich um einen sogenannten außenliegenden Mechanismus, bei dem die Seitenscheibe zwischen der Nassseite des Aggregateträgers und einer oder mehreren Führungsschienen, auf der/denen ein mittels eines Zugmittels (z. B. Seil) bewegbarer Mitnehmer geführt ist, der mit der Seitenscheibe und vorzugsweise auch mit der Antriebseinheit des Fensterhebermechanismus verbunden ist, liegt. In diesem Fall ist es bevorzugt, dass das Befestigungsmittel den Fensterhebermechanismus (vorzugsweise die erwähnte/-n Führungsschiene/-n) über ein Winkelelement mit dem Aggregateträger verbindet. Das Winkelelement überhaupt ermöglicht erst eine Vormontageeinheit bestehend aus wenigstens Fensterrahmen, Seitenscheibe, außenliegendem Fensterhebermechanismus und Aggregateträger. Wie erwähnt, verläuft die Seitenscheibe bei einem außenliegenden Mechanismus zwischen der Nassseite des Aggregateträgers und einer oder mehreren Führungsschienen. Somit ist der Raum zwischen den Führungsschienen und dem Aggregateträger zur Bewegung der Seitenscheibe belegt und eine Vormontage der Führungsschienen direkt an dem Aggregateträger zunächst nicht möglich. Um eine Vormontageeinheit mit dem oben genannten Umfang zu ermöglichen, wird daher das Winkelelement eingesetzt. Durch ein solches Winkelelement, das die Führungsschiene über einen Abstand mit dem Aggregateträger verbindet, wird der von der Bewegung der Seitenscheibe besetzte Raum zwischen dem Aggregateträger und den Führungsschienen überbrückt. Folglich weist das Winkelelement auch den Vorteil auf, bei einer Türvormontageeinheit, bei der der Aggregateträger nach der Montage an dem Türkasten, entgegen dem hauptsächlichen Erfindungsgedanken, nicht abnehmbar ist, eine solche Vormontageeinheit zu ermöglichen. Somit stellt das Merkmal des Winkelelements ein eigenständiges Element dar, das auch ohne die Merkmale des Befestigungsmittels und der Montagevorbereitung einen eigenständigen Erfindungsgedanken bildet. Das Winkelelement kann beispielsweise S-förmig ausgebildet sein, wobei die beiden oberen und unteren Schenkel des "S" einerseits an der Führungsschiene bzw. den Führungsschienen des Fensterhebermechanismus angebracht werden und der andere Schenkel an dem Aggregateträger. Alternativ könnte das Winkelelement auch im Wesentlichen U-förmig sein, wobei die beiden Schenkel des "U" jeweils an der/den Führungsschiene/-n und dem Aggregateträger direkt oder indirekt zu befestigen sind und die Breite des die beiden Schenkel verbindenden Abschnitts entspricht im Wesentlichen der Breite des Raums, in dem die Seitenscheibe beweglich ist. In dem Fall, in dem das Winkelelement eigenständiger Erfindungsgedanke ist, d.h. ohne die zuvor genannten Merkmale, kann die Befestigung an dem Aggregateträger unlösbar erfolgen, ebenso wie auch die Verbindung mit der/den Führungsschiene/-n. Als Weiterbildung des oben genannten Erfindungsgedankens, wie er auch im Patentanspruch 1 definiert ist, wäre die Verbindung des Winkelelements mit dem Aggregateträger lösbar gestaltet, nämlich über das Befestigungsmittel.

Handelt es sich um einen innenliegenden Mechanismus, d.h. die Fensterscheibe verläuft auf der der Nassseite des Aggregateträgers abgewandten Seite der zuvor erwähnten Führungsschiene bzw. -schienen, so verbindet das Befestigungsmittel den Fensterhebermechanismus (vorzugsweise die erwähnte/-n Führungsschiene/-n) mit dem Aggregateträger direkt, d.h. ohne zusätzliche weitere Bauteile.

Gemäß einer vorteilhaften Ausführungsform der vorliegenden Erfindung handelt es sich bei dem Befestigungsmittel um einen Schnellverschluss. Schnellverschlüsse sind im Allgemeinen im Stand der Technik bekannt und zum Beispiel als Drehverschlüsse in der EP 1 114 256 B1 beschrieben. Derartige Schnellverschlüsse ermöglichen ein unkompliziertes und schnelles Lösen der Verbindung des Fensterhebermechanismus mit dem Aggregateträger, ebenso wie ein schnelles Verbinden bei der Montage der Vormontageeinheit.

Alternativ kann es sich bei dem Befestigungsmittel auch um eine aufbrechbare Einwegverbindung handeln. Mit anderen Worten wird die Verbindung des Fensterhebermechanismus mit dem Aggregateträger einmal hergestellt und bei der Demontage des Aggregateträgers zerstört. Da der Fensterhebermechanismus ausreichend an dem Türkasten befestigt ist, ist bei der anschließenden Montage des Aggregateträgers eine erneute Verbindung des Aggregateträgers mit dem Fensterhebermechanismus nicht mehr erforderlich.

Eine weitere Alternative besteht in einer Clips- oder einer Schraubverbindung.

Vorteilhafterweise entspricht das Befestigungsmittel einem Befestigungsmittel, das die lösbare Verbindung des Aggregateträgers mit dem Fensterrahmen und/oder die lösbare Verbindung des Aggregateträgers mit dem Türkasten herstellt. Dies führt dazu, dass bei der Demontage des Aggregateträgers immer nur das gleiche Befestigungsmittel gelöst werden muss, d.h. auch das Befestigungsmittel, das den Aggregateträger mit dem Fensterhebermechanismus verbindet. Somit ist immer der gleiche Vorgang und möglicherweise immer das gleiche Werkzeug notwendig. Dies führt zu einer erheblich verbesserten Handhabung.

Gemäß der vorliegenden Erfindung wird der Zugang zu der Montagevorbereitung des Fensterhebermechanismus durch eine Öffnung erreicht, die in dem Aggregateträger ausgebildet ist. Vorzugsweise handelt es sich bei dieser Öffnung um eine Öffnung zum Anbringen eines Befestigungsmittels, wie beispielsweise eines Schnelldrehverschlusses oder eines anderen Befestigungsmittels, das zum lösbaren Verbinden des Aggregateträgers mit dem Türkasten dient.

Um eine ausreichende Trennung des Türkastens in Nass- und Trockenbereich zu erzielen, ist es vorteilhaft, dass der Aggregateträger eine umlaufende Dichtung aufweist.

Bei dem Aggregateträger kann es sich um ein Kunststoffteil handeln, insbesondere ein kompaktes oder geschäumtes Spritzgussteil. Alternativ kann der Aggregateträger jedoch auch als Metallblech ausgestaltet sein, wobei insbesondere ein Stahlblech, ein Blech aus einer Aluminiumlegierung oder ein Blech aus einer Magnesiumlegierung verwendet wird. Eine weitere Alternative für den Aggregateträger ist ein Kunststoff-Metall Verbund, der vorteilhafterweise mittels Inserttechnik, Outserttechnik oder Hybridtechnik hergestellt wird.

Ferner ist es von Vorteil, dass in dem Montageumfang der Vormontageeinheit auch der Außenspiegel enthalten ist, der vorzugsweise am Fensterrahmen montiert ist. Darüber hinaus kann der Vormontageumfang auch Abdichtungen für die Türfuge, Blenden und anderes umfassen.

Wie bereits erwähnt, schlägt die vorliegende Erfindung ferner eine Kraftfahrzeugtür mit einer oben genannten Vormontageeinheit vor, bei der der Fensterhebermechanismus über das Befestigungsmittel mit dem Aggregateträger und mit dem Türkasten verbunden ist und bei der der Fensterrahmen sowie der Aggregateträger mit dem Türkasten verbunden sind.

Bei dem erfindungsgemäßen Montageverfahren einer solchen Kraftfahrzeugtür wird zunächst die Vormontageeinheit in den Türkasten eingesetzt. Im Anschluss werden die Verbindungen des Fensterrahmens mit dem Türkasten, des Aggregateträgers mit dem Türkasten und des Fensterhebermechanismus mit dem Türkasten über das Befestigungsmittel, wobei der letztgenannte Vorgang von der Trockenseite des Aggregateträgers her erfolgt, hergestellt.

Beim Demontieren eines Aggregateträgers in einer solchen Kraftfahrzeugtür wird, abgesehen von dem Abnehmen der Türinnenverkleidung, die Verbindung des Aggregateträgers mit dem Türkasten und dem Fensterrahmen gelöst und ebenfalls die Verbindung des Aggregateträgers mit dem Fensterhebermechanismus, was ebenfalls von der Trockenseite des Aggregateträgers her erfolgen kann.

Weitere Vorteile und Merkmale der vorliegenden Erfindung werden aus der folgenden genauen Beschreibung einer bevorzugten Ausführungsform ersichtlich.

### 4 Kurze Beschreibung der Zeichnungen

Im Folgenden wird die vorliegende Erfindung unter Bezugnahme auf die begleitenden Zeichnungen anhand einer bevorzugten Ausführungsform rein beispielhaft genauer beschrieben.

In den Figuren zeigt:
- Figur 1: eine Vormontageeinheit für ein Kraftfahrzeug gemäß einer beispielhaften Ausführungsform der vorliegenden Erfindung.
- Figur 2: eine Explosionsansicht der Vormontageeinheit aus Figur 1 inklusive des Türkastens, in den die Vormontageeinheit einzusetzen ist.
- Figur 3: eine Kraftfahrzeugtür mit einer erfindungsgemäßen Vormontageeinheit, bei der der Aggregateträger als separates Element entfernt ist.

In den verschiedenartigen Ansichten kennzeichnen gleiche Bezugszeichen gleiche oder ähnliche.Elemente.

### 5 Beschreibung einer bevorzugten Ausführungsform

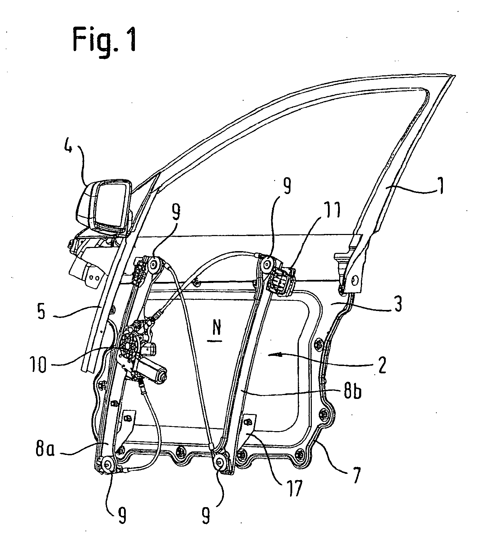

Figur 1 zeigt eine Vormontageeinheit für ein Kraftfahrzeug und zum Verbinden mit einem Türkasten des Kraftfahrzeugs gemäß einer beispielhaften Ausführungsform der vorliegenden Erfindung. Die Vormontageeinheit weist einen Fensterrahmen 1, eine zumindest in dem Fensterrahmen geführte Seitenscheibe, die nicht dargestellt ist, einen Fensterhebermechanismus 2 und einen Aggregateträger 3 auf.

Wie es aus den Zeichnungen ersichtlich ist, besteht der Fensterrahmen 1 in der beispielhaften Ausführungsform aus einem Fensterrahmenblech, einer Fensterführung, Blenden und Abdichtungen. Ferner ist an dem Fensterrahmen bereits der Außenspiegel 4 eines Kraftfahrzeugs angebracht. Die nicht dargestellte Seitenscheibe ist in einer Führungsschiene 5 geführt, die sich, an dem Fensterrahmen befestigt, über diesen hinaus erstreckt.

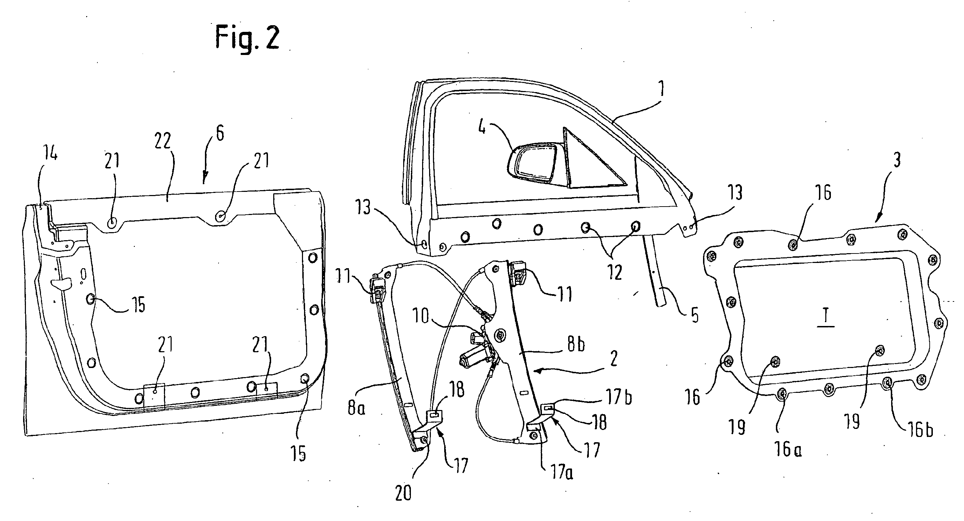

Der Aggregateträger 3 dient später als Träger für weitere Bauteile, wie beispielsweise Lautsprecher, Elemente für den Türöffner, Leitungssätze, etc. Darüber hinaus dient der Aggregateträger 3 dazu, den Türkasten 6 (siehe Figur 2) in einen Nassbereich und einen Trockenbereich zu unterteilen, wobei der Trockenbereich der Raum ist, der auf der der Fahrgastzelle zugewandten Seite (T) des Aggregateträgers angeordnet ist, d.h. zwischen dem Aggregateträger und einer nicht dargestellten Türinnenverkleidung. Der Nassbereich (N) im Gegensatz dazu liegt zwischen dem Aggregateträger und dem Türaußenblech, d.h. dem Außenblech des Türkastens 6. Um diese Trennung vornehmen zu können, weist der Aggregateträger 3 eine umlaufende (z.B. um den gesamten Umfang) Dichtung 7 auf.

Der Fensterhebermechanismus 2, wie er in der beispielhaften Ausführungsform der vorliegenden Erfindung in den Figuren 1 und 2 zum Einsatz kommt, ist ein sogenannter "außenliegender" Fensterhebermechanismus. Dieser setzt sich zusammen aus zwei Führungsschienen 8a und 8b, auf denen je ein mittels eines Zugmittels (z.B. Seil) bewegbarer Mitnehmer 11 geführt ist, der jeweils mit der Seitenscheibe verbunden ist. Das Zugmittel, in der dargestellten Ausführungsform ein Seil, läuft um Umlenkrollen 9, die jeweils an oberen und unteren Enden der Führungsschienen 8a und 8b drehbar befestigt sind. Das Zugmittel wird über einen Motor 10 entsprechend angetrieben, um die nicht dargestellten Mitnehmer derart zu bewegen, dass sich die Seitenscheibe hebt bzw. senkt. Um einen außen liegenden Fensterhebermechanismus 2 handelt es sich deshalb, weil die Seitenscheibe in einem Raum zwischen den Führungsschienen 8a und 8b und dem Aggregateträger 3 bewegt wird, d.h. bei herunter gefahrener Scheibe liegen der Motor 10 sowie die Führungsschienen 8a und 8b außen, d.h. zwischen der Seitenscheibe und der Türaußenhaut (d.h. dem Blech, das nach außen weist).

In Figur 2 sind die in Bezug auf Figur 1 erläuterten Elemente in einer Explosionsansicht dargestellt. Ferner erfolgt die Sicht auf die Elemente in Figur 2 von der der Fahrgastzelle zugewandten Seite des Aggregateträgers her, wohingegen die Ansicht in Figur 1 von der entgegengesetzten Seite her erfolgt. Aus Figur 2 ist ersichtlich, dass der Fensterrahmen in einem horizontal verlaufenden Abschnitt mehrere kreisförmige Aussparungen 12 aufweist. Darüber hinaus sind auch mehrere Befestigungsvorbereitungen 13 an dem Fensterrahmen 1 vorgesehen, die zur Verbindung des Fensterrahmens mit entsprechenden Befestigungsvorbereitungen 14 in dem Türkasten 6 dienen.

Darüber hinaus sind auch in dem Türkasten 6 mehrere kreisförmige Aussparungen 15 vorgesehen. Der Aggregateträger 3 weist beispielsweise Öffnungen für Schnellverschlüsse 16 auf, wie sie in der EP 1 114 256 B1 beschrieben sind. Diese Schnellverschlüsse 16 dienen der lösbaren Verbindung des Aggregateträgers 3 mit dem Fensterrahmen 1 und dem Türkasten 6. Dazu greifen die Schnellverschlüsse 16 in die Aussparungen 15 und 12 des Türkastens 6 bzw. des Fensterrahmens 1 ein und durch Verdrehen der Schnellverschlüsse wird eine Verbindung hergestellt, d.h. Schultern der Verschlüsse hintergreifen den Umfang der Aussparungen 12 und 15.

Wie es weiter Figur 2 zu entnehmen ist, weist der Fensterhebermechanismus zwei Winkelelemente 17 auf, die z.B.. fest mit den Führungsschienen 8a, 8b des Fensterhebermechanismus 2 verbunden sind. Diese Winkelelemente 17 sind in der dargestellten beispielhaften Ausführungsform derart konfiguriert, dass sie grob eine S-Form beschreiben, wobei ein unterer Schenkel 17a mit der Führungsschiene 8b bzw. 8a verbunden ist. Diese Verbindung kann durch Verschweißen, Verschrauben und jegliche andere denkbare Verbindungsmöglichkeit bewirkt werden.

In dem anderen Schenkel 17b ist wiederum eine Aussparung 18 vorgesehen. Diese Aussparung 18 dient dazu, dass weitere Schnellverschlüsse 19 in dem Aggregateträger 3, die vorzugsweise gleich den Schnellverschlüssen 16 ausgestaltet sind, mit der Aussparung in Eingriff bringbar sind bzw. deren Umfang, um so eine Fixierung des Fensterhebermechanismus 2 mit dem Aggregateträger zu erzielen, die gelöst werden kann.

Ferner sind die Drehachsen 20 der Rollen 9 des Fensterhebermechanismus 2 hohl bzw. mit einem Durchgangsloch ausgestaltet und dienen als Montagevorbereitung zum Verbinden des Fensterhebermechanismus 2 mit entsprechenden Befestigungsvorbereitungen 21 in dem Türkasten 6.

Im Folgenden wird zunächst die Verbindung der Elemente der Vormontageeinheit als solches, wie sie in Figur 1 dargestellt ist, erläutert. An dem Fensterrahmen 1 als Ausgangselement sind angebracht der Außenspiegel 4 sowie der Aggregateträger 3. Die Verbindung des Aggregateträgers 3 mit dem Fensterrahmen 1 erfolgt dabei über die Schnellverschlüsse 16, die in die Aussparungen 12 des Fensterrahmens 1 greifen. In dem Fensterrahmen 1 geführt ist eine nicht dargestellte Seitenscheibe, die in der Führung 5 beweglich ist. Diese Seitenscheibe ist mit Mitnehmern 11 verbunden, die auf Führungsschienen 8a, 8b des Fensterhebermechanismus 2 laufen. Der Fensterhebermechanismus 2 steht in keiner festen Verbindung mit dem Fensterrahmen, sondern ist über die Winkelelemente 17 mit dem Aggregateträger 3 verbunden. Als Beispiel für ein lösbares Befestigungsmittel zu diesem Zweck sind die Schnellverschlüsse 19 dargestellt, die in die Aussparungen 18 der Winkelelemente 17 eingreifen, um eine lösbare Verbindung zwischen dem Aggregateträger 3 und dem Fensterhebermechanismus 2 zu bewirken. Es sind jedoch auch andere lösbare Verbindungen denkbar, wie z.B. Clipsverbindungen, Schraubverbindungen oder auch eine einmalig aufbrechbare (zerstörbare) Verbindung. Ist die Seitenscheibe in der Vormontageeinheit nach oben gefahren, d.h. sie liegt in der Führung 5 und in der Fensterfuge, die in dem Fensterrahmen umläuft, an, so reicht die Verbindung des Fensterhebermechanismus 2 über die Winkelelemente 17 mit dem Aggregateträger aus, um eine ausreichende Fixierung und Festlegung des Fensterhebermechanismus 2 zu erreichen, um diesen problemlos handhaben zu können.

Durch den Vormontageumfang der Vormontageeinheit und die Fixierung des Fensterhebermechanismus 2 an dem Aggregateträger 3 mit eingesetzter Seitenscheibe in dem Fensterrahmen 1 wird eine vollkommen autark vorprüfbare (z.B. Fensterhebermechanismus mit Seitenscheibe in der Führung 5) Vormontageeinheit geschaffen, die lediglich in den Türkasten 6 (beim Automobilbauer) einzusetzen und zu montieren ist.

Im Folgenden wird die Montage der erfindungsgemäßen Vormontageeinheit in einem Türkasten 6 eines Kraftfahrzeugs erläutert. Dabei wird insbesondere Bezug auf Figur 2 genommen.

Die in Figur 1 dargestellte Vormontageeinheit wird in den Türkasten 6 eingesetzt. Im Anschluss erfolgt die Verbindung des Fensterrahmens 1 mit dem Türkasten 6. Wie bereits erwähnt, erfolgt dies über die Befestigungsvorbereitungen 13 und 14. Die Verbindung des Fensterrahmens 1 mit dem Türkasten 6 erfolgt derart, dass eine nicht dargestellte Dichtung zwischengesetzt wird, die die Verbindung abdichtet. Dann erfolgt eine sehr exakte Ausrichtung des Fensterrahmens 1 zu dem Türkasten 6. Durch diesen, etwas aufwändigeren Vorgang ist es wünschenswert, gerade diese Verbindung zwischen dem Fensterrahmen 1 und dem Türkasten 6 nicht mehr zu lösen.

Im Anschluss wird der Fensterhebermechanismus 2 wenigstens an einem Punkt, vorzugsweise an allen vier Punkten, durch die hohlen Drehachsen 20 der Rollen 9 mit entsprechenden Vorbereitungen 21 in dem Türkasten 6 verbunden, vorzugsweise verschraubt. Mit anderen Worten dienen die hohlen Drehachsen der Rollen 9 als Montagevorbereitung 20. Diese hohlen Drehachsen 20 sind erfindungsgemäß von der Trockenseite T des Aggregateträgers her zugänglich. Vorteilhafterweise wird die Zugänglichkeit dadurch ermöglicht, dass die Schnellverschlüsse, die den hohlen Drehachsen 20 gegenüber liegen (in Figur 2 mit 16a und 16 b gekennzeichnet), herausgenommen werden, so dass sich Aussparungen oder Durchbrüche (Öffnungen) durch den Aggregateträger 3 ergeben, durch den eine Verschraubung des Fensterhebermechanismus 2 mit dem Türkasten 6 an den beiden unteren hohlen Drehachsen 20 der Rollen 9 bewirkt werden kann. Gleichermaßen können die Schnellverschlüsse für die Verbindung mit dem Fensterrahmen 1 derart positioniert sein, dass sie den Befestigungsvorbereitungen 21 in dem Verstärkungsträger 22 des Türkastens gegenüber liegen, so dass bei entfernten Schnellverschlüssen auch die oberen hohlen Drehachsen 20 von der Trockenseite T des Aggregateträges her zugänglich werden. Alternativ könnte jedoch auch nur ein Durchbruch in dem Aggregateträger vorgesehen sein, der die Montagevorbereitung (hohle Drehachse) zugänglich macht. Dieser Durchbruch könnte nach dem Montagevorgang beispielsweise mit einem Elastomerformteil verschlossen werden.

Ist der Fensterhebermechanismus 2 derart an dem Türkasten 6 fixiert, werden die restlichen Drehverschlüsse 16 eingesetzt und greifen in die Aussparungen 15 des Türkastens 6, um den Aggregateträger 3 mit diesem lösbar zu verbinden.

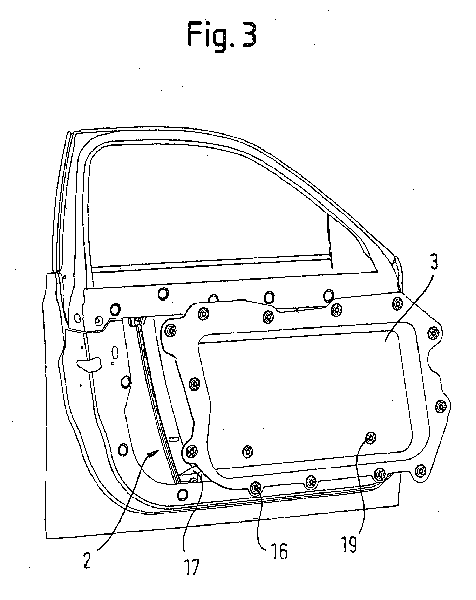

So entsteht eine Kraftfahrzeugtür, wie sie in Figur 3 dargestellt ist. Im Folgenden wird nun die Demontage des Aggregateträgers als separate Einheit erläutert. Wird es zu Wartungszwecken erforderlich, den Aggregateträger 3 von der Kraftfahrzeugtür zu entfernen, so werden lediglich die Schnellverschlüsse 16 sowie 19 gelöst. D.h., es wird auch die Verbindung des Aggregateträgers 3 mit dem Fensterhebermechanismus 2, die über die Winkelelemente 17 erfolgt, gelöst. Da der Fensterhebermechanismus 2 jedoch über die feste Verbindung (Verschraubung) durch die hohlen Drehachsen 20 der Rollen 9 mit den Befestigungsvorbereitungen 21 an dem Türkasten 6 fixiert ist, verbleibt er in seiner Stellung, obwohl seine Verbindung mit dem Aggregateträger 3 gelöst wird.

Gemäß der vorliegenden Erfindung erfüllt der Aggregateträger somit eine Dreifachfunktion, nämlich dient er als Träger für weitere Bauelemente, wie es oben ausgeführt wurde und zur Trennung des Türkastens in Nassbereich N und Trockenbereich T. Darüber hinaus dient er erfindungsgemäß als Vormontageträger für den Fensterhebermechanismus 2. Da die Verbindung mit dem Fensterhebermechanismus 2 von der Trockenseite (T) des Aggregateträgers her lösbar ausgestaltet ist, kann jedoch der Aggregateträger 3 trotz dieser Vormontage nach der Verbindung der Vormontageeinheit mit dem Türkasten als separates Element entfernt werden. Handelt es sich bei dem Befestigungsmittel, das den Aggregateträger 3 mit dem Fensterhebermechanismus 2 verbindet, um den gleichen Schnellverschluss 19, wie die Schnellverschlüsse 16, die den Aggregateträger 3 mit dem Fensterrahmen 1 und dem Türkasten 6 verbinden, so ist bei diesem Vorgang immer der gleiche Schnellverschluss zu lösen (immer gleiche Handhabung, immer gleiches Werkzeug). Es ist jedoch nicht zwingend notwendig, dass der Schnellverschluss 16 identisch dem Schnellverschluss 19 ist. Ferner muss es sich bei dem Befestigungsmittel nicht um einen Schnellverschluss 19 handeln, sondern es können auch, wie vorstehend ausgeführt, andere Befestigungsmittel eingesetzt werden, solange diese von der Trockenseite des Aggregateträgers her lösbar sind.

Auch nach dem Abnehmen des Aggregateträgers 3 als separate Einheit bleibt der Fensterhebermechanismus 2 in seiner Stellung fixiert, weil er an dem Türkasten 6 mittels seiner Montagevorbereitung fixiert ist. Diese Verbindung kann auf beliebige Art und Weise erstellt werden und es ist lediglich wesentlich, dass die Montagevorbereitung von der Trockenseite T des Aggregateträgers 3 her zugänglich ist, um nach dem Einsetzen der Vormontageeinheit in den Türkasten 6 diese Fixierung vornehmen zu können. Auch muss die Montagevorbereitung nicht zwingend durch die hohlen Drehachsen 20 der Rollen 9 bereit gestellt sein. Auch kann lediglich eine Aussparung in den Führungsschienen 8a und 8b vorgesehen sein.

Handelt es sich darüber hinaus um einen innen liegenden Fensterhebermechanismus, so kann das Winkelelement 17 auch weggelassen werden, da die Seitenscheibe dann ohnehin zwischen den Führungsschienen 8a und 8b und der Türaußenhaut verläuft.

Ferner ist anzumerken, dass beim Wiederansetzen des Aggregateträgers 3 nach den Wartungsarbeiten die Verbindung mit dem Fensterhebermechanismus 2 nicht unbedingt wieder herzustellen ist, weil dieser ja bereits voll fixiert am Türkasten 6 z.B. verschraubt ist.

Somit wird durch die vorliegende Erfindung ein großer Vormontageumfang ermöglicht, bei dem dennoch der Aggregateträger 3 als separates Element von der vollständig fertig montierten Kraftfahrzeugtür entfernt werden kann, ohne dass ein komplizierter Vorgang notwendig ist und/oder der Fensterhebermechanismus 2 mit entnommen werden muss.

Es versteht sich, dass die vorliegende Erfindung nicht auf die oben beschriebene beispielhafte Ausführungsform beschränkt ist, sondern im Umfang ihrer Patentansprüche entsprechend modifiziert und abgewandelt werden kann.

## Patentansprüche

1. Vormontageeinheit für ein Kraftfahrzeug und zum Verbinden mit einem Türkasten (6) des Kraftfahrzeugs, umfassend
eine geführte Seitenscheibe,
einen Fensterhebermechanismus (2), der mit der Seitenscheibe in Verbindung steht, um diese zu heben oder zu senken,
einen Aggregatträger (3) mit einer Nassseite (N) und einer Trockenseite (T) zum Trennen des Türkastens in einen Nass- und einen Trockenbereich, und
wenigstens ein Befestigungsmittel (19), das den Fensterhebermechanismus mit dem Aggregatträger verbindet und von der Trockenseite des Aggregatträgers her lösbar ist,
**gekennzeichnet durch**
einen Fensterrahmen (1), wobei die Seitenscheibe zumindest in dem Fensterrahmen geführt ist und der Aggregatträger mit dem Fensterrahmen lösbar verbunden ist;
wenigstens eine an oder in dem Fensterhebermechanismus vorgesehene Montagevorbereitung (20), die zum Verbinden des Fensterhebermechanismus mit dem Türkasten ausgestaltet und von der Trockenseite des Aggregatträgers her zugänglich ist, um bei einer Demontage, bei der die lösbare Befestigung des Fensterhebermechanismus an dem Aggregateträger gelöst wird, den Aggregatträger als separate Einheit abnehmen zu können, während der Fensterhebermechanismus am Türkasten fixiert bleibt, wobei der Zugang zu der Montagevorbereitung (20) des Fensterhebermechanismus (2) **durch** eine Öffnung, die in dem Aggregatträger ausgebildet ist, erreicht ist, die zum Anbringen eines Befestigungsmittels (16) zum lösbaren Verbinden des Aggregatträgers mit dem Türkasten und/oder dem Fensterrahmen (1) dient.

2. Vormontageeinheit nach Anspruch 1, bei der der Fensterhebermechanismus (2) ein außen liegender Mechanismus ist und das Befestigungsmittel (19) den Fensterhebermechanismus über ein Winkelelement (17) indirekt mit dem Aggregatträger (3) verbindet.

3. Vormontageeinheit nach Anspruch 1, bei der der Fensterhebermechanismus (2) ein innen liegender Mechanismus ist und das Befestigungsmittel (19) den Fensterhebermechanismus direkt mit dem Aggregatträger (3) verbindet.

4. Vormontageeinheit nach einem der vorstehenden Ansprüche, bei der es sich bei dem Befestigungsmittel (19) um einen Schnellverschluss handelt.

5. Vormontageeinheit nach einem der Ansprüche 1 bis 3, bei der es sich bei dem Befestigungsmittel (19) um eine aufbrechbare Einwegverbindung handelt.

6. Vormontageeinheit nach einem der Ansprüche 1 bis 3, bei der es sich bei dem Befestigungsmittel (19) um eine Clipsverbindung handelt.

7. Vormontageeinheit nach einem der Ansprüche 1 bis 3, bei der es sich bei dem Befestigungsmittel (19) um eine Schraubverbindung handelt.

8. Vormontageeinheit nach einem der vorstehenden Ansprüche, bei der das Befestigungsmittel (19) einem Befestigungsmittel (16) entspricht, dass die lösbare Verbindung des Aggregatträgers (3) mit dem Festerrahmen (1) herstellt und/oder den Aggregatträger (3) lösbar mit dem Türkasten (6) verbindbar gestaltet.

9. Vormontageeinheit nach einem der vorstehenden Ansprüche, bei der der Aggregatträger (3) eine umlaufende Dichtung (7) aufweist.

10. Vormontageeinheit nach einem der vorstehenden Ansprüche, bei der der Aggregatträger (3) ein Kunststoffteil, insbesondere ein kompaktes oder geschäumtes Spritzgussteil ist.

11. Vormontageeinheit nach einem der Ansprüche 1 bis 9, bei der der Aggregatträger (3) ein Metallblech, insbesondere ein Stahlblech, ein Blech aus einer Aluminiumlegierung oder ein Blech aus einer Magnesiumlegierung ist.

12. Vormontageeinheit nach einem der Ansprüche 1 bis 9, bei der der Aggregatträger (3) ein Kunststoff-Metall Verbund, insbesondere hergestellt mittels Inserttechnik, Outserttechnik oder Hybridtechnik ist.

13. Vormontageeinheit nach einem der vorstehenden Ansprüche, bei der an dem Fensterrahmen (1) einen Außenspiegel (4) angebracht ist.

14. Kraftfahrzeugtür mit einer Vormontageeinheit nach einem der vorstehenden Ansprüche, bei der der Fensterhebermechanismus (2) mit dem Türkasten und über das Befestigungsmittel (19) mit dem Aggregatträger (3) verbunden ist und bei der der Fensterrahmen (1) sowie der Aggregatträger (3) mit dem Türkasten (6) verbunden sind.

15. Montageverfahren einer Kraftfahrzeugtür nach Anspruch 14, umfassend die Schritte:
Einsetzen der Vormontageeinheit in den Türkasten (6);
Verbinden des Fensterrahmens (1) mit dem Türkasten (6);
Verbinden des Aggregatträgers (3) mit dem Türkasten (6); und
Verbinden des Fensterhebermechanismus (2) mit dem Türkasten (6) über die Montagevorbereitung (20) von der Trockenseite (T) des Aggregatträgers (3) her.

16. Demontageverfahren eines Aggregatträgers in einer Kraftfahrzeugtür nach Anspruch 14, umfassend die Schritte:
Lösen der Verbindungen des Aggregatträgers (3) mit dem
Türkasten (6) und dem Fensterrahmen (1); und
Lösen der Verbindung des Aggregatträgers (3) mit dem Fensterhebermechanismus (2) von der Trockenseite (T) des Aggregatträgers her.

## Claims

1. Preassembly unit for a motor vehicle and for connection to a door case (6) of the vehicle, comprising
a guided side window,
a window winder mechanism (2) which is connected to the side window in order to raise or lower it,
an assembly carrier (3) having a wet side (N) and a dry side (T) for dividing the door case into wet and dry regions, and
at least one fastening means (19) which connects the window winder mechanism to the assembly carrier and is releasable from the dry side of the assembly carrier,
**characterised by**
a window frame (1), wherein the side window is guided at least in the window frame and the assembly carrier is releasably connected to the window frame;
at least one assembly priming device (20) which is provided on or in the window winder mechanism and designed for connecting the window winder mechanism to the door case and which is accessible from the dry side of the assembly carrier in order to be able to remove the assembly carrier as a separate unit upon dismounting, during which the releasable fastening of the window winder mechanism to the assembly carrier is released, while the window winder mechanism remains fixed to the door case, wherein access to the assembly priming device (20) of the window winder mechanism (2) is gained through an opening which is formed in the assembly carrier and which serves to mount a fastening means (16) for releasably connecting the assembly carrier to the door case and/or the window frame (1).

2. Preassembly unit according to claim 1, in which the window winder mechanism (2) is a mechanism located on the outside and the fastening means (19) connects the window winder mechanism indirectly via an angle element (17) to the assembly carrier (3).

3. Preassembly unit according to claim 1, in which the window winder mechanism (2) is a mechanism located on the inside and the fastening means (19) connects the window winder mechanism directly to the assembly carrier (3).

4. Preassembly unit according to any of the preceding claims, in which the fastening means (19) is a quick-acting closure.

5. Preassembly unit according to any of claims 1 to 3, in which the fastening means (19) is a disposable connection which can be broken open.

6. Preassembly unit according to any of claims 1 to 3, in which the fastening means (19) is a clip connection.

7. Preassembly unit according to any of claims 1 to 3, in which the fastening means (19) is a screw connection.

8. Preassembly unit according to any of the preceding claims, in which the fastening means (19) corresponds to a fastening means (16) which makes the releasable connection of the assembly carrier (3) to the window frame (1) and/or makes the assembly carrier (3) capable of releasable connection to the door case (6).

9. Preassembly unit according to any of the preceding claims, in which the assembly carrier (3) has a peripheral seal (7).

10. Preassembly unit according to any of the preceding claims, in which the assembly carrier (3) is a plastic part, in particular a compact or foamed injection moulding.

11. Preassembly unit according to any of claims 1 to 9, in which the assembly carrier (3) is a metal sheet, in particular a steel sheet, a sheet made of an aluminium alloy or a sheet made of a magnesium alloy.

12. Preassembly unit according to any of claims 1 to 9, in which the assembly carrier (3) is a plastic/metal composite, in particular made by the insert method, outsert method or hybrid method.

13. Preassembly unit according to any of the preceding claims, in which an external mirror (4) is mounted on the window frame (1).

14. Motor vehicle door having a preassembly unit according to any of the preceding claims, in which the window winder mechanism (2) is connected to the door case and via the fastening means (19) to the assembly carrier (3) and in which the window frame (1) and the assembly carrier (3) are connected to the door case (6).

15. Method for assembling a motor vehicle door according to claim 14, comprising the steps of:
inserting the preassembly unit in the door case (6);
connecting the window frame (1) to the door case (6);
connecting the assembly carrier (3) to the door case (6); and
connecting the window winder mechanism (2) to the door case via the assembly priming device (20) from the dry side (T) of the assembly carrier (3).

16. Method for dismounting an assembly carrier in a motor vehicle door according to claim 14, comprising the steps of:
releasing the connections of the assembly carrier (3) to the door case (6) and the window frame (1); and
releasing the connection of the assembly carrier (3) to the window winder mechanism (2) from the dry side (T) of the assembly carrier.

## Revendications

1. Unité de pré-assemblage pour un véhicule automobile, destinée à être raccordée à un caisson de porte (6) du véhicule automobile, comprenant
une vitre latérale coulissante,
un mécanisme lève-vitre (2) relié à la vitre latérale pour lever ou abaisser celle-ci,
et un support d'agrégat (3) avec une face humide (N) et une face sèche (T) pour séparer le caisson de porte en une zone humide et une zone sèche, et
au moins un moyen de fixation (19) raccordant le mécanisme lève-vitre au support d'agrégat et qui est amovible de la face sèche du support d'agrégat,
**caractérisée par**
un cadre de fenêtre (1), la vitre latérale étant guidée au moins dans le cadre de fenêtre et le support d'agrégat étant raccordé de manière amovible au cadre de fenêtre ;
au moins un module de montage (20) prévu sur ou dans le mécanisme lève-vitre, réalisé pour raccorder le mécanisme lève-vitre au caisson de porte et accessible de la face sèche du support d'agrégat, pour pouvoir retirer le support d'agrégat en tant qu'unité séparée, lors d'un démontage où la fixation amovible du mécanisme lève-vitre est retirée du support d'agrégat, cependant que le mécanisme lève-vitre reste fixé sur le caisson de porte, l'accès au module de montage (20) du mécanisme lève-vitre (2) étant rendu possible par une ouverture formée dans le support d'agrégat, laquelle sert à appliquer un moyen de fixation (16) pour le raccordement amovible du support d'agrégat au caisson de porte et/ou au cadre de fenêtre (1).

2. Unité de pré-assemblage selon la revendication 1, où le mécanisme lève-vitre (2) est un mécanisme extérieur et où le moyen de fixation (19) relie indirectement le mécanisme lève-vitre au support d'agrégat (3) par l'intermédiaire d'un élément en équerre (17).

3. Unité de pré-assemblage selon la revendication 1, où le mécanisme lève-vitre (2) est un mécanisme intérieur et où le moyen de fixation (19) relie directement le mécanisme lève-vitre au support d'agrégat (3).

4. Unité de pré-assemblage selon l'une des revendications précédentes, où le moyen de fixation (19) est une attache rapide.

5. Unité de pré-assemblage selon l'une des revendications 1 à 3, où le moyen de fixation (19) est un raccord cassable à usage unique.

6. Unité de pré-assemblage selon l'une des revendications 1 à 3, où le moyen de fixation (19) est une connexion à pince.

7. Unité de pré-assemblage selon l'une des revendications 1 à 3, où le moyen de fixation (19) est une connexion à vis.

8. Unité de pré-assemblage selon l'une des revendications précédentes, où le moyen de fixation (19) correspond à un moyen de fixation (16) qui réalise le raccord amovible du support d'agrégat (3) avec le cadre de fenêtre (1) et/ou rend le support d'agrégat (3) raccordable de manière amovible avec le caisson de porte (6).

9. Unité de pré-assemblage selon l'une des revendications précédentes, où le support d'agrégat (3) comporte un joint (7) périphérique.

10. Unité de pré-assemblage selon l'une des revendications précédentes, où le support d'agrégat (3) est une pièce en matière synthétique, en particulier une pièce moulée par injection, compacte ou cellulaire.

11. Unité de pré-assemblage selon l'une des revendications 1 à 9, où le support d'agrégat (3) est une tôle métallique, en particulier une tôle d'acier, une tôle en alliage d'aluminium ou une tôle en alliage de magnésium.

12. Unité de pré-assemblage selon l'une des revendications 1 à 9, où le support d'agrégat (3) est un composite matière synthétique-métal, et est notamment fabriqué par technique de moulage insert, outsert ou hybride.

13. Unité de pré-assemblage selon l'une des revendications précédentes, où un rétroviseur extérieur (4) est monté contre le cadre de fenêtre (1).

14. Porte de véhicule automobile avec une unité de pré-assemblage selon l'une des revendications précédentes, où le mécanisme lève-vitre (2) est raccordé au caisson de porte et au support d'agrégat (3) par le moyen de fixation (19), et où le cadre de fenêtre (1) ainsi que le support d'agrégat (3) sont raccordés au caisson de porte (6).

15. Procédé d'assemblage d'une porte de véhicule automobile selon la revendication 14, comprenant les étapes de :
mise en place de l'unité de pré-assemblage dans le caisson de porte (6) ;
raccordement du cadre de fenêtre (1) au caisson de porte (6) ;
raccordement du support d'agrégat (3) au caisson de porte (6) ; et
raccordement du mécanisme lève-vitre (2) au caisson de porte (6) au moyen du module de montage (20) depuis la face sèche (T) du support d'agrégat (3).

16. Procédé de démontage d'un support d'agrégat dans une porte de véhicule automobile selon la revendication 14, comprenant les étapes de :
démontage des raccords du support d'agrégat (3) au caisson de porte (6) et au cadre de fenêtre (1) ; et
démontage du raccord du support d'agrégat (3) au mécanisme lève-vitre (2) depuis la face sèche (T) du support d'agrégat.
